## Europäisches Patentamt

## European Patent Office

## Office européen des brevets

(11) Veröffentlichungsnummer: **0 003 535**
**B2**

(12) **NEUE EUROPÄISCHE PATENTSCHRIFT**

(45) Veröffentlichungstag der neuen Patentschrift:
**09.05.84**

(51) Int. Cl.³: **G 03 B 15/05,** G 03 B 7/16

(21) Anmeldenummer: **79100222.3**

(22) Anmeldetag: **26.01.79**

(54) **Elektronenblitzlichtgerät mit Lichtdosiervorrichtung.**

(30) Priorität: **03.02.78 DE 7803142 U**

(43) Veröffentlichungstag der Anmeldung:
**22.08.79 Patentblatt 79/17**

(45) Bekanntmachung des Hinweises auf die Patenterteilung:
**30.09.81 Patentblatt 81/39**

(45) Bekanntmachung des Hinweises auf die Entscheidung über den Einspruch:
**09.05.84 Patentblatt 84/19**

(84) Benannte Vertragsstaaten:
**BE CH DE FR GB IT NL**

(56) Entgegenhaltungen:
**DE - A - 1 907 080**
**DE - A - 2 330 522**
**DE - B - 1 772 940**
**DE - B - 1 955 680**
**DE - U - 1 878 687**
**DE - U - 6 925 696**
**DE - U - 7 607 299**

**"Minolta XD-7"**
**AGFATRONIC 380CBS Elektronenblitzgerat**
**Bedienungsanleitung 8789**

(73) Patentinhaber: **Regula-Werk King GmbH & Co. Vermögensverwaltung, Postfach 25, D-7263 Bad Liebenzell (DE)**

(72) Erfinder: **King, Herbert, Hans-Schiedt-Weg, D-7263 Bad Liebenzell (Schwarzwald) (DE)**

(74) Vertreter: **Mayer, Friedrich, Dr. et al, Patentanwälte Dr. F. Mayer Dipl.-Phys. G. Frank Westliche 24, D-7530 Pforzheim (DE)**

ACTORUM AG

## Beschreibung

Die Erfindung betrifft ein Elektronenblitzlichtgerät entsprechend dem Gattungsbegriff des Anspruchs 1.

Elektronenblitzlichtgeräte mit Lichtdosiervorrichtung sind bekannt (z.B. US-PS 3 340 426). Seit einigen Jahren ist es zudem üblich, die lichtempfindliche Zelle der Lichtdosiervorrichtung auf mehrere Empfindlichkeitsbereiche einstellbar zu machen. Bei Gebrauch eines solchen Blitzgerätes wird zunächst die feste Marke des die Blendewerte tragenden Stellgliedes auf den Empfindlichkeitswert des in der Kamera eingelegten Films eingestellt. Will der Fotografierende bei seiner Aufnahme von einem bestimmten Blendenwert ausgehen, um beispielsweise eine grosse Tiefenschärfe zu erreichen, so kann er auf der Skala für Entfernungsbereiche ablesen, welchen Abstand er vom Objekt einzuhalten hat. Er kann ferner ausgehend vom relevanten Blendenwert über eine Leitlinie, die diesem Blendenwert zugehörige Empfindlichkeitsstufe erkennen.

Will der Fotografierende jedoch, beispielsweise im Hinblick auf bestimmte Helligkeitsverhältnisse von einer bestimmten Empfindlichkeitsstufe der lichtempfindlichen Zelle ausgehen, so kann er über eine Leitlinie ablesen, in welchem Entfernungsbereich er zu arbeiten hat. Er kann ferner an der Blendenwertskala ablesen, mit welcher Blende, d.h. bei welcher Schärfentiefe die Aufnahme erfolgt.

Bei Momentaufnahmen kommt es für eine lebensnahe Erfassung bestimmter, sich rasch verändernder Situationen darauf an, dass die Einstellung des Elektronenblitzgerätes nach Blende, Empfindlichkeitsstufe und Entfernungsbereich bei minimalem Zeitaufwand erfolgt, ohne dass ein ins Gewicht fallender zusätzlicher technischer Aufwand erforderlich wäre.

Ausgehend von dieser Überlegung liegt der Erfindung die Aufgabe zugrunde, ein Elektronenblitzgerät der eingangs genannten Gattung derart weiterzubilden, dass die genannten Parameter in ihrer gegenseitigen Zuordnung wesentlich rascher und leichter erkennbar sind.

Diese Aufgabe wird erfindungsgemäss durch die im Kennzeichen des Anspruches 1 angegebenen Merkmale gelöst. Weitere Ausgestaltungen der Erfindung ergeben sich aus den Unteransprüchen. Nachstehend wird die Erfindung anhand der Zeichnung erläutert.

Es zeigen:
Fig. 1 – eine Rückansicht des Elektronenblitzgerätes.
Fig. 2 und 3 – Ausschnitte aus Varianten des Gerätes.

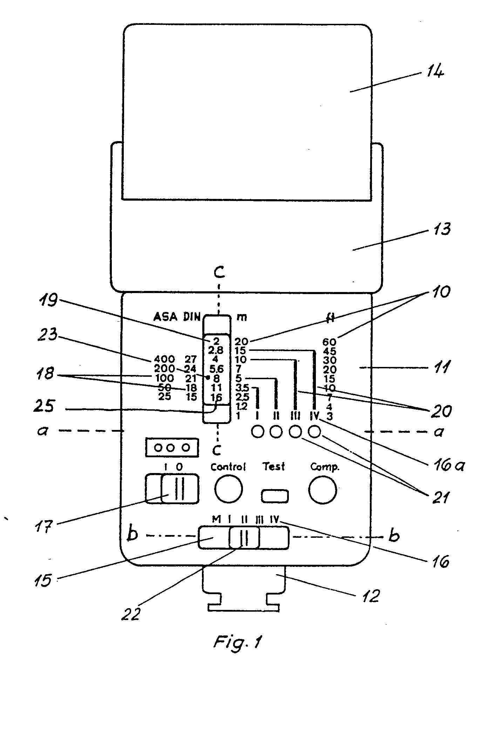

Das Gehäuse 11 des Gerätes ist mit einem Steckfuss 12 sowie einem Schwenkbügel 13 zum Verschwenken des Reflektorkopfes 14 versehen. Die Lichtdosiervorrichtung des Elektronenblitzgerätes umfasst eine lichtempfindliche Zelle, deren Empfindlichkeit für das vom Objekt reflektierte Licht stufenweise einstellbar ist. Die Einstellung der Empfindlichkeitsstufen I-IV entspricht der Blendeneinstellung der Kamera und erfolgt mit Hilfe eines im Gehäuse 11 des Gerätes geführten Stellgliedes 15, das als Schieber ausgebildet ist. Wie aus der Figur 1 ersichtlich, ist die feste Marke 22 des Schiebers auf die Empfindlichkeitsstufen I, II, III, IV einstellbar. Im Gehäuse 11 ist ein weiteres als Schieber ausgebildetes Stellglied 19 vorgesehen. Die lineare Bewegungsbahn c-c dieses Schiebers verläuft senkrecht zur Bewegungsbahn b-b des Schiebers 15 für die Einstellung der Empfindlichkeitsstufen. Auf dem Stellglied 19 ist die Skala für die Blendenwerte 25 sowie eine feste Marke 23 aufgebracht. Die Marke 23 ist auf den relevanten Wert einer benachbarten stationären Skala für Filmempfindlichkeit einstellbar. Auf der anderen Seite des die Blendenwerte 25 tragenden Schiebers 19 ist parallel zu diesem eine Skala 10 für Entfernungsbereiche angeordnet. Die einzelnen Entfernungsbereiche sind durch Leitlinien 20 voneinander abgegrenzt, die zu Leuchtdioden 21 führen. Die Linie a-a der linear angeordneten Leuchtdioden verläuft parallel zur Bewegungsbahn b-b des Stellgliedes 15, dem die Skala 16 der Empfindlichkeitsstufen I, II, III, IV zugeordnet ist. Der Geräteschalter 17 dient dem Ein- und Ausschalten des Gerätes. Die Marke 22 des Stellgliedes 15 ist zusätzlich auf eine Raststufe M für manuellen Betrieb einstellbar.

Das Kontaktelement des Stellgliedes 15 zur Einstellung der Empfindlichkeitsstufen I-IV ist zugleich das Kontaktelement eines entspechend den Raststufen des Stellgliedes 15 arbeitenden Schalters für Leuchtdioden 21. Bei Einstellung der Marke 22 auf eine bestimmte Empfindlichkeitsstufe im Rahmen einer Raststufe wird der Stromkreis der zugehörigen Leuchtdiode I oder II usw. geschlossen und diese leuchtet auf. Auf diese Weise ist es für den Fotografierenden möglich, die einer bestimmten Empfindlichkeitsstufe entsprechende Blende bzw. den zugehörigen Entfernungsbereich rascher zu erfassen. Diese gilt besonders bei Helligkeitsverhältnissen, die an sich ein Ablesen der einander zugeordneten Werte nicht oder nur schwer zulassen würden.

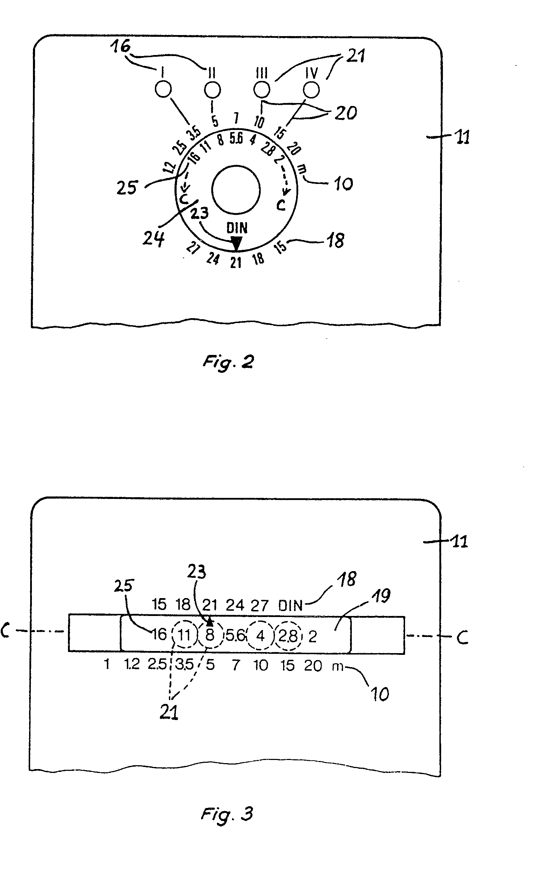

Im Ausführungsbeispiel der Fig. 2 ist das die Blendenwerte 25 tragende Stellglied ein Drehelement 24. Die Blendenwerte 25 sind über einem Sektor des Umfanges des Drehelementes 24 angeordnet. Die Blendenwerte und die am Umfang angeordnete Marke 23 korrespondieren mit stationären, kreisbogenförmig angeordneten Skalen 10, 18 für Entfernungsbereiche und Filmempfindlichkeit. Die linear angeordneten Leuchtdioden 21 sind mittels Leitlinie 20 bestimmten Werten der Skala 10 für Entfernungsbereiche räumlich zugeordnet. Die die Empfindlichkeitsstufen I-IV gemäss der Skala 16 anzeigenden Leuchtdioden 21 können aber auch anders, nämlich in der kreisbogenförmigen Bewegungsbahn der Blendenwerte 25 angeordnet sein. In diesem Falle ist das Drehelement 24 aus durchsichtigem Werkstoff gefertigt. Die die Empfindlichkeitsstufe I anzeigende

Leuchtdiode` liegt sodann beim Entfernungswert 3, 5 die die Empfindlichkeitsstufen II, III, IV anzeigenden Leuchtdioden sind den Entfernungswerten 5, 10 und 15 unmittelbar benachbart. Bei einer Stellung des Drehelementes 24 wie in Fig. 2 wird je nach Einstellung der Empfindlichkeitsstufe der lichtempfindlichen Zelle der Blendenwert 11, 8, 4 oder 2, 8 von unten beleuchtet.

Ein ähnliches Prinzip der Anordnung ist im Ausführungsbeispiel der Fig. 3 verwirklicht. Auch dort liegen die Leuchtdioden 21 in der, allerdings linearen, Bewegungsbahn der Blendenwerte des Stellgliedes 19, das als Schieber aus durchsichtigem Werkstoff ausgebildet ist. Der Schieber ist von den stationären Skalen 18 für Filmempfindlichkeit und 10 für Entferungsbereiche flankiert die parallel zur Bewegungsrichtung c-c des Schiebers liegen. Auch hier ist bei einer bestimmten Stellung des Schiebers 19 jeweils der einer bestimmten Empfindlichkeitsstufe I-IV zugehörige Blendenwert benachbarten Position von unten durchleuchtet und hebt sich von den übrigen Blendenwerten ab und bei schlechten Lichtverhältnissen ist es dem Bedienenden auf diese Weise noch möglich, den in unmittelbarer Nachbarschaft liegenden zugehörigen Entfernungswert zu erkennen, der ebenfalls von der Leuchtdiode erhellt wird.

**Patentansprüche**

1. Elektronenblitzgerät mit einer Lichtdosiervorrichtung, welche eine das vom Objekt reflektierte Licht empfangende, lichtempfindliche Zelle umfasst, deren Empfindlichkeit in mehreren Stufen entsprechend der Blendeneinstellung der Kamera mit Hilfe eines im Gehäuse des Gerätes geführten ersten Stellgliedes (15) einstellbar ist, das ein Kontaktelement zur Einstellung der Empfindlichkeitsstufen aufweist, sowie mit einem die Blendenwerte tragenden zweiten Stellglied (19, 24), das eine auf eine Skala (18) für Filmempfindlichkeit einstellbare Marke (23) aufweist, wobei eine stationäre Skala (10) für Entfernungsbereiche dem die Blendenwerte tragenden zweiten Stellglied (19, 24) zugeordnet ist, so dass der für den jeweils eingestellten Empfindlichkeitswert der Lichtdosiervorrichtung geltende Blendenwert und der zugehörige Entfernungsbereich angezeigt werden, dadurch gekennzeichnet, dass das erste Stellglied (15) in den den Empfindlichkeitsstufen zugeordneten Stellungen verrastbar ist, und sein Kontaktelement zugleich als Kontaktelement eines Schalters dient, der in jeder einer Empfindlichkeitsstufe entsprechenden Raststellung des ersten Stellgliedes (15) jeweils eine von mehreren Leuchtdioden (21) einschaltet, die bestimmten Werten der Skala (10) für Entfernungsbereiche zugeordnet sind.

2. Gerät nach Anspruch 1, dadurch gekennzeichnet, dass die Leuchtdioden (21) linear und rechtwinklig zur Bewegungsrichtung (c-c) des als Schieber ausgebildeten zweiten Stellgliedes (19) angeordnet sind (Fig. 1).

3. Gerät nach Anspruch 2, dadurch gekennzeichnet, dass das als Schieber ausgebildete erste Stellglied (15) zur Einstellung der Empfindlichkeitsstufen eine parallel zur Linie (a-a) der Leuchtdioden (21) verlaufende Bewegungsbahn (b-b) aufweist.

4. Gerät nach Anspruch 1, dadurch gekennzeichnet, dass die Leuchtdioden (21) in der linearen Bewegungsbahn der Blendenwerte (25) des zweiten Stellgliedes (19) angeordnet sind (Fig. 3).

5. Gerät nach Anspruch 4, dadurch gekennzeichnet, dass die Leuchtdioden (21) unter dem aus durchsichtigem Werkstoff bestehenden zweiten Stellglied (19) liegen, das beidseits von den Werten der stationären Skalen (10, 18) für Entfernungen und Filmempfindlichkeit flankiert ist.

6. Gerät nach Anspruch 5, dadurch gekennzeichnet, dass die jeweils im Stromkreis liegende und die jeweils eingestellte Empfindlichkeitsstufe anzeigende Leuchtdiode (21) unter dem zugehörigen, von ihrem Lichtfeld erhellten Blendenwert (25) des eingestellten Stellgliedes (19) liegt.

7. Gerät nach Anspruch 1 dadurch gekennzeichnet, dass das die Blendenwerte tragende Stellglied ein Drehelement (24) mit über einen Sektor seines Umfanges angeordneten Blendenwerten (25) ist, wobei die Blendenwerte (25) und die Marke (23) mit den auf Kreisbögen angeordneten Werten der stationären Skalen (10, 18) für Entfernungsbereiche und Filmempfindlichkeit korrespondieren (Fig. 2).

8. Gerät nach Anspruch 7, dadurch gekennzeichnet, dass die Leuchtdioden (27) linear angeordnet und bestimmten Werten der kreisförmigen Skala (10) für Entfernungsbereiche räumlich zugeordnet sind.

9. Gerät nach Anspruch 7, dadurch gekennzeichnet, dass die im Stromkreis liegenden und die jeweils eingestellte Empfindlichkeitsstufe anzeigende Leuchtdiode (21) unter dem zugehörigen, vom Lichtfeld erhellten Blendenwert (25) des eingestellten durchsichtigen Drehelementes (24) liegt.

**Revendications**

1. Flash électronique à système de dosage de la lumière, comprenant une cellule photosensible recevant la lumière réfléchie par le sujet et dont la sensibilité est réglable sur plusieurs paliers en fonction de l'ouverture du diaphragme de l'appareil photographique au moyen d'un premier élément de réglage (15) guidé dans le boîtier de l'appareil muni d'un élément de contact pour le réglage des paliers de sensibilité, et un deuxieme élément de réglage (19, 24) portant les valeurs des ouvertures de diaphragme et un repère (23) pouvant être déplacé sur une échelle (18) de sensibilité de la pellicule, une échelle fixe (10) de distance étant associée au deuxième élément de réglage (19, 24) portant les ouvertures de diaphragme, de sorte que l'ouverture de diaphragme valable pour chaque valeur de sensibilité choisie et la distance correspondante sont affichées, caractérisé par le fait que le premier élément de réglage (15) peut être enclenché dans les positions correspondant aux paliers de sensibilité de la cellule et que son élément de contact sert en même temps d'élément de contact pour un commutateur qui met en circuit, dans chaque position du premier élément de réglage correspondant à un palier de sensibilité, une parmi plusieurs diodes lumineuses (21) associées à des valeurs déterminées de l'échelle (10) des distances.

2. Appareil selon revendication 1, caractérisé par le fait que diodes lumineuses (21) sont disposées à la direction de mouvement (c-c) du deuxième de réglage (19) se présentant sous forme de curseur (fig. 1).

3. Appareil selon revendication 2, caractérisé par le fait que le premier élément de réglage (15) se présentant sous forme de curseur destiné au réglage des degrés de sensibilité se déplace sur une trajectoire disposée parallèlement à la ligne (a-a) des diodes lumineuses (21).

4. Appareil selon revendication 1, caractérisé par le fait que les diodes lumineuses (21) sont disposées sur la trajectoire de mouvement linéaire des ouvertures de diaphragme (25) du deuxième élément de réglage (19) (fig. 3).

5. Appareil selon revendication 4, caractérisé par le fait que les diodes lumineuses (21) sont placées sous le deuxième élément de réglage (19) en matériau transparent, cet élément étant flanqué d'un côté et de l'autre des valeurs des échelles fixes (10, 18) pour les distances et la sensibilité de la pellicule.

6. Appareil selon revendication 5, caractérise par le fait que la diode lumineuse (21) se trouvant respectivement dans le circuit électrique et indiquant le degré de diaphragme correspondante (25) éclairée par son champ lumineux de l'élément de réglage (19) mis en position.

7. Appareil selon revendication 1, caractérisé par le fait que l'élément de réglage supportant les ouvertures de diaphragme est constitué par un élément rotatif (24) avec des ouvertures de diaphragme (25) disposées sur un secteur de sa circonférence, les ouvertures de diaphragme (25) et le repère (23) avec les valeurs des échelles fixes (10, 18) disposées sur des arcs circulaires correspondant pour les distances et la sensibilité de la pellicule (fig. 2).

8. Appareil selon revendication 7, caractérisé par le fait que les diodes lumineuses (21) sont disposées de façon linéaire et correspondent dans leur disposition à certaines valeurs de l'échelle circulaire (10) pour les distances.

9. Appareil selon revendication 7, caractérisé par le fait que la diode lumineuse (21), se trouvant respectivement dans le circuit électrique et indiquant le degré de sensibilité choisi se trouve sous l'ouverture de diaphragme correspondante (25), éclairée par le champ lumineux, de l'élément rotatif transparent (24) mis en position.

**Claims**

1. Electronic flash apparatus with a light·dosing device including a light-sensitive photocell receiver of the light reflected by the object, the sensitivity of which is adjustable in several steps according to the diaphragm setting of the camera by means of a first adjusting element (15) moving in the housing of the apparatus and having a contact element for the adjustment of the sensitivity levels, as well as by means of a diaphragm intervals bearing second adjusting element (19; 24), which has an adjustable mark (23) for film sensitivity on a scale (8), a stationary scale (10) for distance ranges being associated to the diaphragm intervals bearing second adjusting element (19, 24), so that both the diaphragm setting corresponding to the individual sensitivity level of the light dosing device and the corresponding distance range are indicated, characterized in that the first adjusting element (15) is lockable in the positions associated to the sensitivity levels, the contact element of the first adjusting element (15) serving also as contact element of a switch, which energizes in each lock-in position corresponding to a given sensitivity level one of several luminous diodes,which are relied to certain values of distance ranges of the stationary scale (10).

2. Apparatus according to claim 2, characterized in that the luminous diodes (21) are arranged linearly and square to the moving direction (c-c) of the slide-design second adjusting element (19) (Fig. 1).

3. Apparatus according to claim 2, characterized in that the slide-design first adjusting element (15) has a travel path (b-b) parallel to the line (a-a) of the luminous diodes (21) for the adjustment of the sensitivity levels.

4. Apparatus according to claim 1, characterized in that the luminous diodes (21) are arranged in the linear travel path of the diaphragm intervals (25) of the second adjusting element (19).

5. Apparatus according to claim 4, characterized in that the luminous diodes (21) are located under the second adjusting element (19) made of transparent material, said adjusting element being flanked on both sides by the stationary scales (10, 18) for distance and film sensitivity.

6. Apparatus according to claim 5, characterized in that the respective luminous diode (21) lying in the electric circuit and indicating the adjusted sensitivity level is arranged under the associated diaphragm interval (25) of the set adjusting element (19) illuminated by its light field.

7. Apparatus according to claim 1, characterized in that the adjusting element bearing the diaphragm intervals is a rotating element (24) with diaphragm intervals (25) arranged over a sector of its circumference, the diaphragm intervals (25) and the mark (23) corresponding to the values arranged on circular arcs of the stationary scales (10, 18) for distance ranges and film sensitivity (Fig. 2).

8. Apparatus according to claim 7, characterized in that the luminous diodes (21) are arranged linearly and associated spatially to certain values of the circular scale (10) for distance ranges.

9. Apparatus according to claim 7, characterized in that the luminous diode (21) lying in the electric circuit and indicating the respective set sensitivity level is arranged under the associated diaphragm interval (25) of the set transparent rotating element (24) illuminated by the light field.

Fig. 1

Fig. 2

Fig. 3